Europäisches Patentamt

**European Patent Office**

Office européen des brevets

(19)

(11) Veröffentlichungsnummer: **0 310 860**
**A1**

(12) **EUROPÄISCHE PATENTANMELDUNG**

(21) Anmeldenummer: **88115454.6**

(22) Anmeldetag: **21.09.88**

(51) Int. Cl.4: **F16L 11/02** , **F16L 11/12**

(30) Priorität: **08.10.87 AT 2662/87**

(43) Veröffentlichungstag der Anmeldung:
**12.04.89 Patentblatt 89/15**

(84) Benannte Vertragsstaaten:
**AT CH DE ES FR GB IT LI NL SE**

(71) Anmelder: **A. HABERKORN GESELLSCHAFT
m.b.H. & CO. KG
Werndlstrasse 3
A-4240 Freistadt(AT)**

(72) Erfinder: **Haberkorn, Karl
Werndlstrasse 3
A-4240 Freistadt(AT)**

(74) Vertreter: **Puchberger, Rolf, Dipl. Ing. et al
Patentanwälte, Dipl. Ing. Georg Puchberger
Dipl. Ing. Rolf Puchberger Dipl. Ing. Peter
Puchberger Singerstrasse 13 Postfach 55
A-1010 Wien(AT)**

(54) **Flexible, textile Konstruktion für Druck- und/oder Saugschläuche.**

(57) Um eine flexible, textile Konstruktion für Druck-
und/oder Saugschläuche bei Tief- und Tiefsttemperaturen einsetzen zu können, werden die Schläuche
aus Synthesegarnen geformt und es wird auf der
Innen- und/oder Außenseite eine Folie oder Beschichtung aus synthetischem Material aufgetragen.

EP 0 310 860 A1

Die Erfindung betrifft eine flexible, textile Konstruktion für Druckund/oder Saugschläuche, die bei Tief- und Tiefsttemperaturen einsetzbar sind.

In der modernen Technik finden zunehmend Gase mit tiefsten Temperaturen, wie flüssiger Stickstoff, flüssiger Sauerstoff und dgl., Verwendung. Das Zuleiten dieser Substanzen mit tiefen und tiefsten Temperaturen ist kompliziert und erfordert teure, spezielle Leitungen. Bisher hat man Kunststoffe wegen der sofortigen Versprödung und der Bruchgefahr nicht eingesetzt, sondern nur starre oder kaum biegbare, teure Metallkonstruktionen.

Aufgabe der vorliegenden Erfindung ist es, eine Schlauchkonstruktion zu schaffen, mit der Substanzen, wie flüssiger Stickstoff oder flüssiger Sauerstoff, gefördert werden können und zu gewährleisten, daß diese Leitungen nicht verspröden, flexibel bleiben, ohne zu brechen, dem auftretenden Druck standhalten und eine geringe Kälteleitfähigkeit besitzen.

Erfindungsgemäß wird jetzt vorgeschlagen, daß die Schläuche aus Synthesegarnen geformt sind und auf der Innen- und/oder Außenseite eine Folie oder Beschichtung aus synthetischém Material tragen. Die Schläuche können aus diesen synthetischen Garnen gewebt, gewirkt, geflochten oder gewickelt sein und als Materialien haben sich hochfestes Polyacrylgarn (PAC), aber auch Polyestergarne (PES), Polypropylengarne (PP) als geeignet erwiesen. Auch Garne oder Monofile aus speziellen Rohstoffen, wie Polyetheretherketon (PEEK), Polytetrafluorethylen (ETFE) und Polybenzimidazole (PBI) können für Sondereinsatzgebiete, vorwiegend in Kombination mit PAC, PES oder PP Garnen zweckmäßig verwendet werden. Es können sowohl Multifilamente als auch Monofilamente und Fasergarne eingesetzt werden.

Es hat sich gezeigt, daß hochfestes Polyacrylnitril (PAC) neben der hohen Festigkeit und guten UV- und Chemikalienbeständigkeit auch bei tiefsten Temperaturen keine Veränderung hinsichtlich der Biegsamkeit bzw. Festigkeit aufweist. Aus diesem Material hergestellte Schläuche können daher vorteilhaft für den Transport von flüssigen Gasen eingesetzt wer den. Die Garne aus diesen hochfesten Polyacrylfasern, z.B. Dolanit der Hoechst AG. Fft., werden zu einem Schlauch gewebt, gewirkt, geflochten oder gewickelt und innen und/oder außen mit einer kältbeständigen (nicht versprödenden Dispersion oder Folie abgedichtet). Es hat sich überraschend gezeigt, daß spezielle synthetische Fasern bzw. Folien in einem speziellen Aufbau bisher nicht bekannte, vorteilhafte Eigenschaften liefern (Nichtversprödung bei Tiefsttemperaturen). Gemäß der Erfindung wird aus diesen Materialien ein Schlauch erzeugt, wobei in erster Linie nicht der Web- oder Flechtvorgang, sondern der spezielle und neuartige Aufbau eines solchen Schlauches die Erfindung darstellt. Erst durch diese angemeldete Konstruktion ergeben sich die bisher nicht bekannten, vorteilhaften Eigenschaften eines Textilschlauches, nämlich die Eignung zum Transport von Gasen mit tiefsten Temperaturen.

Die Erfindung sei nun anhand von Beispielen näher beschrieben.

Beispiel 1

Es wurde ein Schlauch unter Verwendung von hochfestem Polyacrylgarn, und zwar Dolanit (Warenzeichen der Fa.Hoechst), gewebt und mit einer nahtlosen Polyesterfolie, Naluphan (Warenzeichen der Fa.Kalle),versehen. Dann wurde flüssiger Stickstoff eingefüllt und der Schlauch nach einigen Minuten untersucht. Es trat keine merkbare Abnahme der Flexibilität der Schlauchkonstruktion ein, auch war es nicht möglich, den Schlauch mit einem 5kg-Hammer zu zerstören. Der Schlauch konnte alle Schläge aufnehmen und dies zeigt, daß keinerlei Versprödung des Materials aufgetreten war.

Beipsiel 2

Es wurde ein Schlauch aus Polyesterfilamentgarnen, Trevira hochfest (Warenzeichen), geflochten und mit einer nahtlosen Folie aus dem gleichen Material versehen. Es wurde dann flüssiger Stickstoff eingefüllt und nach einigen Minuten ebenfalls versucht, den Schlauch mit einem 5kg-Hammer durch Schläge zu zerstören. Der Schlauch hielt allen Schlä gen stand und es konnten nachträglich keinerlei Beschädigungen festgestellt werden. Nach wie vor konnte der Schlauch gebogen werden, ohne zu brechen und die Kälteleitfähigkeit war äußerst gering; so war nur geringfügige Reifbildung auf der Außenseite des Schlauches festzustellen.

**Ansprüche**

1. Flexible, textile Konstruktion für Druck- und/oder Saugschläuche, die bei Tief- und Tiefsttemperaturen einsetzbar sind, dadurch gekennzeichnet, daß die Schläuche aus Synthesegarnen geformt sind und auf der Innen- und/oder Außenseite eine Folie oder Beschichtung aus synthetischem Material tragen.

2. Konstruktion nach Anspruch 1, dadurch gekennzeichnet, daß die Schläuche aus Synthesegarnen gewebt, gewirkt, geflochten oder gewickelt sind.

3. Konstruktion nach Anspruch 1 oder 2, dadurch gekennzeichnet, daß als Synthesematerialien hochfeste Polyacrylnitrilfasergarne (PAC) eingesetzt werden.

4. Konstruktion nach einem der vorhergehenden Ansprüche, dadurch gekennzeichnet, daß als Synthesematerialien hochfeste Polyetherfilamentgarne oder Monofile (PES) eingesetzt werden.

5. Konstruktion nach einem der vorhergehenden Ansprüche, dadurch gekennzeichnet, daß als Synthesematerialien Polyetheretherketon (PEEK) Filamentgarne oder Monofile eingesetzt werden.

6. Konstruktion nach einem der vorhergehenden Ansprüche, dadurch gekennzeichnet, daß als Synthesematerialien Polybenzimidazolfasergarne eingesetzt werden.

7. Konstruktion nach einem der vorhergehenden Ansprüche, dadurch gekennzeichnet, daß als Synthesematerialien Polypropylenfaser- oder Filamentgarne bzw. -Monofile eingesetzt werden.

8. Konstruktion nach einem der vorhergehenden Ansprüche, dadurch gekenn zeichnet, daß als Synthesematerialien Polytetrafluorethylenmonofile eingesetzt werden.

9. Konstruktion nach einem der vorhergehenden Ansprüche, dadurch gekennzeichnet, daß entsprechend den Einsatzerfordernissen Mischungen verschiedener Synthesematerialien verwendet werden.

10. Konstruktion nach einem der vorhergehenden Ansprüche, dadurch gekennzeichnet, daß die auf der Innen- und/oder Außenseite aufgebrachte Folie versprödungsfrei ist und den erforderlichen Druckbelastungen Stand hält.

## EINSCHLÄGIGE DOKUMENTE

EP 88115454.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | AT - B - 350 861 (THÖNI ARTHUR) -- | | F 16 L 11/02 F 16 L 11/12 |
| A | AT - B - 310 514 (WEINHEIMER GUMMIWERKE GESELLSCHAFT MBH) -- | | |
| A | DE - B - 1 256 879 (GEORGE ANGUS & COMPANY LTD.) -- | | |
| A | US - A - 4 492 089 (ROHNER) ---- | | |

RECHERCHIERTE SACHGEBIETE (Int. Cl.4)

F 16 L 11/00

F 16 L 53/00

F 16 L 59/00

F 16 L 9/00

Der vorliegende Recherchenbericht wurde für alle Patentansprüche erstellt.

| Recherchenort WIEN | Abschlußdatum der Recherche 28-12-198 | Prüfer SCHUGANICH |
|---|---|---|